# EUROPÄISCHE PATENTSCHRIFT

(11) **EP 0 684 248 B1**
(45) Veröffentlichungstag und Bekanntmachung des Hinweises auf die Patenterteilung: **29.08.2001**
(21) Anmeldenummer: 95107514.2
(22) Anmeldetag: 17.05.1995
(51) Int. Cl.: C07F 9/50, C25B 3/04

(54) **Verfahren zur Herstellung von tertiären Diarylalkylphosphinen**
Process for the preparation of tertiary diarylalkylphosphines
Procédé de préparation de diarylalkylphosphines tertiaires

(30) Priorität: 26.05.1994 DE 4418346
(43) Veröffentlichungstag der Anmeldung: 29.11.1995
(73) Patentinhaber: Celanese Chemicals Europe GmbH, 60439 Frankfurt am Main (DE)
(72) Erfinder: Millauer, Hans, Dr., D-65760 Eschborn (DE)

(56) Entgegenhaltungen:
- EP-A- 0 196 742
- EP-A- 0 268 526
- US-A- 5 288 912

## Beschreibung

Die Erfindung betrifft ein Verfahren zur Herstellung von tertiären Diaryl-alkylphosphinen durch reduktive Kupplung von Halogen-diarylphosphinen mit einer quartären Ammoniumverbindung, wobei die Reduktion vorzugsweise durch einen elektrochemischen Prozeß erfolgt.

Tertiäre Phosphine, insbesondere tertiäre Phosphine mit sperrigen aromatischen oder araliphatischen Resten, werden in vielfältiger Form als Liganden zur Komplexierung von Schwermetallatomen verwendet. Die so erhaltenen Komplexe haben als Katalysatoren bei einer Reihe wichtiger industrieller Prozesse, z.B. Hydrierungen und Oxosynthesen große Bedeutung erlangt.

Prinzipiell lassen sich tertiäre Diaryl-alkylphosphine nach zwei verschiedenen Methoden herstellen, wobei man im allgemeinen von technisch verfügbaren Diarylphosphor(III)-Verbindungen wie beispielsweise Diaryl-chlorphosphinen ausgeht und eine dritte P-C-Bindung knüpft.

In "Methoden der organischen Chemie" (Houben-Weyl), 4. Aufl. (1963), Bd. XII/1, Seite 32 ff. wird eine häufig angewandte, allgemeine Methode beschrieben, die in der Umsetzung einer geeigneten metallorganischen Verbindung wie einer Grignardverbindung oder einer organischen Lithiumverbindung mit Diaryl-chlorphosphinen besteht, beispielsweise:

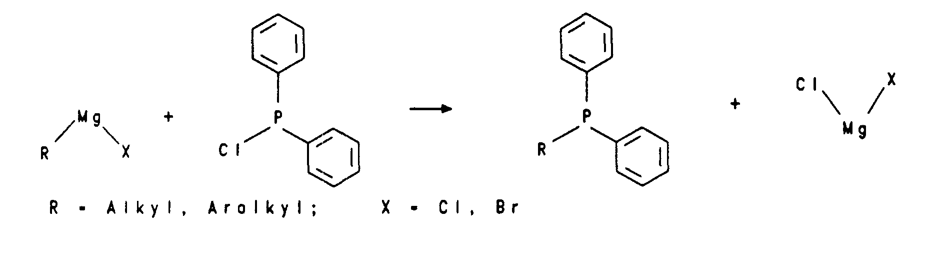

Nachteilig bei dieser Methode ist, daß die entsprechenden metallorganischen Verbindungen fallweise nicht oder nur schwierig zugänglich sind, insbesondere dann, wenn noch bestimmte Substituenten am Rest R, wie Ketogruppen oder Estergruppen vorhanden sind. Es ist auch beobachtet worden, daß das metallorganische Zwischenprodukt anstelle der beabsichtigten Knüpfung einer Kohlenstoff-Phosphor-Bindung andere Produkte bildet, die z.B. aus Kupplungs- oder Ringschlußreaktionen resultieren. Eine weitere, generelle Schwierigkeit dieser Verfahren besteht ferner darin, daß bei derartigen metallorganischen Prozessen typischerweise Kohlenwasserstoffe oder Ether mit niedrigen Flammpunkten und Zündtemperaturen benutzt werden müssen, was die technische Herstellung erschwert.

Eine zweite bekannte Methode besteht darin, daß man das Metallsalz eines Diarylphosphin-Anions erzeugt und mit einem Alkylhalogenid umsetzt. Dieses Verfahren ist jedoch nicht allgemein anwendbar:
T.J. Hall und J.H. Hargis, J. Org. Chem. 51, 4185 ff (1986) beschreiben die elektrochemische Reduktion von Halogen-diarylphosphinen; dabei erhielten sie als einziges Produkt Tetraphenyldiphosphin. Bei dem Versuch, das als Zwischenstufe postulierte Diphenylphosphin-Anion in situ mit Benzylbromid abzufangen, konnte kein Benzyl-diphenylphosphin nachgewiesen werden.

In der europäischen Patentschrift EP 0 268 526 wird ein elektrochemisches Verfahren zur Herstellung von tertiären Diaryl-alkylphosphinen beschrieben, wobei die elektrochemische Reduktion von Arylhalogenphosphinen in Gegenwart organischer aliphatischer Halogenide in einer mit Elektroden ausgerüsteten Elektrolysezelle in einem organischen Lösungsmittelmedium, das einen indifferenten Elektrolyt enthält, durchgeführt und eine verzehrbare Anode verwendet wird.
Dieses Verfahren liefert befriedigende bis gute Ausbeuten bei Alkylhalogeniden mit reinen Alkylresten, z.B. n-Butyl-, oder auch bei bestimmten substituierten Alkylresten, dagegen mäßige bis schlechte Ausbeuten bei araliphatischen Resten (30 % bzw. 44 % bei Benzylchlorid).

Es bestand somit ein großer Bedarf nach einem Verfahren, daß es erlaubt, die Verknüpfung eines Diarylphosphinylrestes mit araliphatischen Resten zu tertiären Diaryl-alkylphosphinen auf technisch einfache und sichere Weise mit hohen Ausbeuten durchzuführen.

Diese Aufgabe wird gelöst durch ein Verfahren zur Herstellung von Phosphinen der Formel (I) 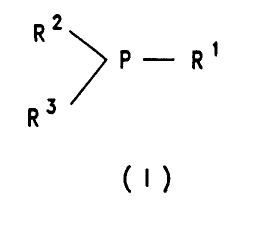 worin bedeuten:
- R¹: (C₁-C₁₀)Alkyl, (C₃-C₁₀)Cycloalkyl, C(YZ)Aryl
Y, Z (C₁-C₄)Alkyl, Wasserstoff,
Aryl Phenyl, Naphthyl, Anthracenyl, Phenanthrenyl oder Biphenyl, Binaphthyl wobei die Alkyl und Cycloalkylreste auch mit CN, O(C₁-C₄)Alkyl, CO(C₁-C₄)Alkyl, COO(C₁-C₄)Alkyl,
-CH₂-CH₂-(C₁-C₁₀)-Polyfluoralkyl, wobei die Cycloalkylreste auch -O- oder -S-Glieder im Ring aufweisen können;
und wobei
die Arylreste mit CN, Halogen,
CO(C₁-C₄)Alkyl, COO(C₁-C₄)Alkyl,
-CH₂-CH₂-(C₁-C₁₀)Polyfluoralkyl, einem 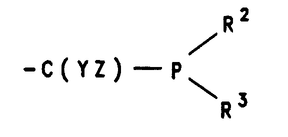 oder einem 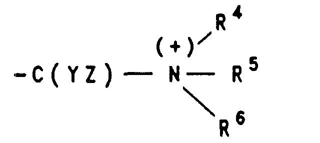 Rest substituiert sein können
- R², R³: unabhängig voneinander Phenyl, Naphthyl, Anthracenyl, die auch mit Halogen, (C₁-C₄)Alkyl, (C₁-C₄)Alkoxy substituiert sein können,
- R⁴, R⁵, R⁶: gleich oder verschieden (C₁-C₁₂)Alkyl oder
- R⁴ und R⁵: zusammen einen 5- oder 6-gliedrigen Ring, der gegebenenfalls weitere N-, O- oder S-Atomen im Ring enthalten kann,
oder
- R⁴, R⁵ und R⁶: ein bicyclisches Ringsystem mit Stickstoff als Brückenkopfatom und gegebenenfalls weiteren Stickstoff-, Sauerstoff- oder Schwefelatomen im Ring,
dadurch gekennzeichnet, daß ein Diarylphosphin der Formel (II) 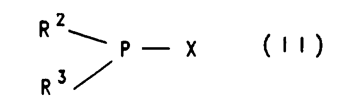 worin R² und R³ die vorstehende genannte Bedeutung besitzen und
- X: für Brom, Chlor, Fluor, (C₁-C₄)Alkoxy, O-Phenyl steht
mit einem Reduktionsmittel und einer quartären Ammoniumverbindung der Formel (III) 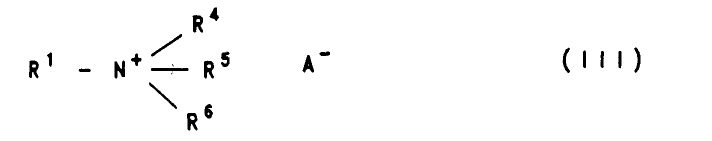
worin
- R¹, R⁴, R⁵, R⁶: die genannte Bedeutung besitzt und

- A: ein Anion einer organischen oder anorganischen Säure darstellt,
umgesetzt wird.

Von großer Bedeutung ist das Verfahren zur Herstellung von Verbindungen der Formel (I), worin R¹ für (C₁-C₈)Alkyl, (C₃-C₈)Cycloalkyl, CH₂-Phenyl, -CH₂-Naphthyl oder CH₂-Biphenyl steht, wobei die Phenyl, Biphenyl und Naphthylreste mit 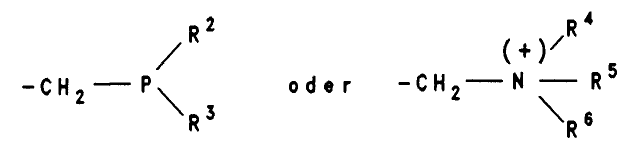 substituiert sein können und R²,R³ für Phenyl oder Naphthyl, R⁴, R⁵, R⁶ für (C₁-C₁₀)-Alkyl und X für Brom, Chlor oder Fluor steht.

Wichtig ist das Verfahren auch zur Herstellung folgender Verbindungen der Formel (I) 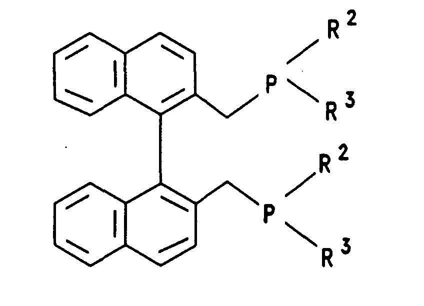 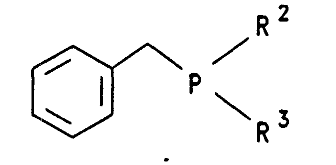 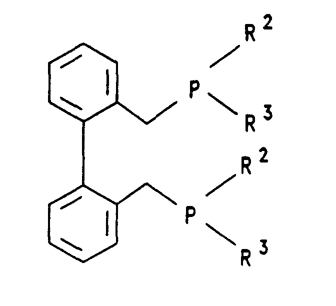 Die Verbindungen der Formel (III) können quartäre Ammoniumverbindungen mit 4 gleichen Resten darstellen. Geht man von verschiedenen Resten R¹, R⁴, R⁵, R⁶ aus, muß der zu übertragende Rest R¹ sich bevorzugt mit der Diphenylphosphingruppe verbinden.
Als Beispiele für die erste Gruppe sind zu nennen: Tetramethylammonium-, Tetraethylammonium-, Tetrapropylammonium- oder Tetrabutylammonium-Salze. Als Beispiele für die zweite Gruppe sind zu nennen (R¹ stellt immer die erstgenannte Gruppe dar): Allyl-trimethylammonium-, Benzyltrimethylammonium-, N-Benzyl-N-methylpiperidinium-, N-Benzyl-N,N'-dimethylpiperazinium-, N-Benzyl-N-methylmorpholinium-, N-Benzyl-(diazabicyclo[2.2.2]octyl)-ammonium-, (2-Naphthyl-methyl)-triethylammonium, 4-Fluorbenzyl-trimethylammonium-, Pentafluorbenzyl-trimethylammonium-, 2,6-Dichlorbenzyl-trimethylammonium-,2-Cyanobenzyl-trimethylammonium-, 4-(Trifluormethyl)-benzyl-ammonium-, Cyclohexyltrimethylammonium oder (Carbomethoxy-methyl)-trimethylammonium-Salze.

Bisquartäre Ammoniumverbindungen (Bisquats), beispielsweise 2,2'-Bis-[(trimethylammonio)-methyl]-biphenyl-Salze oder 2,2'-Bis-[(trimethylammonio)-methyl]-1,1'-binaphthyl-Salze können ebenfalls als Ausgangsverbindungen der Formel (III) eingesetzt werden.

Interessant sind hierbei z.B. die Verbindungen, worin Formel (III) für 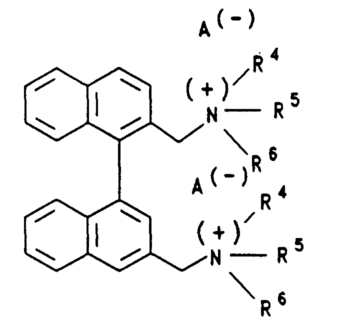 steht, worin R⁴, R⁵, R⁶ und A die genannte Bedeutung besitzen.

Bei Durchführung des Verfahrens kann die Reduktion der Verbindungen der Formel (II) in Gegenwart der Ammoniumverbindung der Formel (III) durchgeführt werden, es ist jedoch auch möglich, zuerst die Reduktion durchzuführen und die Ammoniumverbindung anschließend zuzusetzen.

Die Reduktion der Diarylphosphine der Formel (II) erfolgt vorzugsweise elektrochemisch, kann aber auch auf chemischem Weg, z.B. mit Metallen, insbesondere Alkalimetallen durchgeführt werden ("Methoden der organischen Chemie" (Houben-Weyl), 4. Auflage (1963), Bd. XII/1, Seite 56).

Gegenüber der elektrochemischen Reduktion ist aber dieser Vorgehensweise insofern nachteilig, als wiederum die sicherheitstechnisch aufwendigen Arbeitspraktiken der metallorganischen Synthese angewendet werden müßten. Beim elektrochemischen Verfahren hingegen erfolgt der Reduktionsschritt ausgehend von billigen, sicher handzuhabenden, technisch verfügbaren Ausgangsstoffen auf sehr einfache und technisch beherrschbare Art und Weise.

Man verwendet eine ungeteilte Elektrolysezelle, die von beliebiger Form sein kann, beispielsweise eine trogförmige Zelle oder eine Durchflußzelle, die mindestens eine Kathode und eine Anode aufweist. Die Kathode besteht aus einem der üblichen Metalle, beispielsweise Aluminium, Magnesium, Eisen, Nickel, Chrom, Titan, Kupfer, Zink, Blei, Cadmium, Silber, Gold oder Platin sowie Legierungen dieser Metalle, vorzugsweise Chromnickelstahl, oder aus Kohlenstoffmaterialien, beispielsweise Graphit oder glasartiger Kohlenstoff.

Als Anode werden Metalle eingesetzt, die unter den Elektrolysebedingungen schwer kathodisch abscheidbar sind, beispielsweise Aluminium, Calcium oder vorzugsweise Magnesium.

Als Elektrolyte kommen aprotische, dipolare Lösemittel in Betracht, beispielsweise Acetonitril, Dimethylacetamid, N-Methylpyrrolidon, Tetrahydrofuran oder vorzugsweise Dimethylformamid.
Falls die Zugabe der quartären Ammoniumverbindung erst nach der Elektrolyse erfolgt, kann zusätzlich noch ein indifferentes, im Elektrolyt lösliches Leitsalz zur Verbesserung der elektrischen Leitfähigkeit zugesetzt werden, beispielsweise Alkali- oder Erdalkalihalogenide, beispielsweise Natriumbromid oder vorzugsweise Magnesiumchlorid.

Das erfindungsgemäße Verfahren wird bei Temperaturen zwischen etwa 0°C und 80°C, vorzugsweise zwischen 10°C und 60°C durchgeführt.

Die Elektrolyse erfolgt bei Stromdichten zwischen etwa 1 und 100 mA/cm², vorzugsweise zwischen 5 und 50 mA/cm².

Während der Elektrolyse wird zweckmäßig durch Rühren oder Strömen der Elektrolyt relativ zu den Elektroden bewegt. Erfolgt die Umsetzung in der Weise, daß die quartäre Ammoniumverbindung bereits während der elektrochemischen Reduktion zugegeben ist, so kann man zur Vervollständigung des Umsatzes im Anschluß an die Elektrolyse den Elektrolyt noch für eine gewisse Zeit weiterrühren.

Die Isolierung der Verfahrensprodukte geschieht auf an sich bekannte Weise, beispielsweise durch Abdestillieren des Lösemittels, Lösen des Rückstandes in einem weiteren, mit Wasser nicht mischbaren Lösemittel aus der Gruppe der Kohlenwasserstoffe, Halogenkohlenwasserstoffen, Ether oder Ketone, Extraktion besagter Lösung mit verdünnter Mineralsäure, Verdampfen des Lösemittels und Isolierung des als Rückstand erhaltenen Rohproduktes durch fraktionierte Destillation oder Kristallisation.

Die nachfolgenden Beispiele dienen zur Erläuterung der Erfindung, ohne sie darauf zu beschränken.

Die Herstellung der Verbindungen der Formel (III) kann nach allgemein bekannten Methoden, z.B. durch Umsetzung eines Alkylhalogenids mit einem tertiären Amin erfolgen ("Methoden der organischen Chemie" (Houben-Weyl), 4. Auflage (1963), Bd. XI/2, Seite 593 ff.)

2,2'-Bis-[(trimethylammonium)-methyl]-1,1'-binaphthyl-dibromid kann z.B. in praktisch quantitativer Ausbeute durch Umsetzung von 2,2'-Bis-(brommethyl)-1,1'-binaphthyl mit Trimethylamin in Dimethylformamid bei 70°C hergestellt werden.

### Beispiel 1

Es wird eine ungeteilte Elektrolysezelle verwendet. Die Zelle besteht aus einem zylindrischen Glasgefäß (Durchmesser 40 mm; Höhe 110 mm) mit Kühlmantel und einem eingeschliffenen Deckel aus Glas, in welchem sich 5 kleinere Schliff-Öffnungen befinden. Als Anode wird ein Magnesiumstab (Durchmesser 10 mm; Länge 100 mm; Eintauchtiefe ca. 55 mm) eingesetzt, als Kathode dient ein rechteckiges Netz aus Chromnickel-Stahl (60 x 50 mm), welches zu einem Zylinder geformt und konzentrisch um die Anode angeordnet ist (der Abstand zwischen den Elektroden beträgt ca. 3 mm). Die Elektroden werden durch steife Drähte aus Chromnickel-Stahl, die als Stromzuführung dienen, im Deckel der Zelle gehalten. Die Zelle ist ferner mit einem Thermometer, einem Gaseinleitrohr für Stickstoff und einem Blasenzähler ausgestattet. Eine weitere Öffnung ist mit einem Septum aus Silikonkautschuk verschlossen. Der Elektrolyt wird mit einem Magnetstab gerührt.

Die trockene Zelle wird mit 60 ml Dimethylformamid (max. 0,1 % Wasser) und 10,51 g (0,050 Mol) Tetraethylammoniumbromid beschickt. Man leitet unter Rühren 0,5 h einen getrockneten Stickstoffstrom durch das Gemisch, fügt anschließend 8,82 g (0,040 Mol) Chlor-diphenylphosphin zu und startet unmittelbar darauf die Elektrolyse unter fortgesetztem Rühren und Durchleiten eines schwachen Stickstoffstroms. Die Stromstärke beträgt konstant 0,3 A, die Temperatur 35 bis 40°C. Die Zellspannung liegt im Bereich von 0 bis 1,5 Volt. Die Ladungsmenge beträgt 1,41 Ah. Nach der Elektrolyse wird der Elektrolyt noch 6 h bei 50°C gerührt.
Gemäß gaschromatographischer Analyse (interner Standard: 2-Methylnaphthalin) liegen im Elektrolyt 5,15 g Ethyl-diphenylphosphin vor; das entspricht einer Ausbeute von 60 % bezogen auf eingesetztes Chlordiphenylphosphin.
Das Produkt wird auf folgendem Weg isoliert:
Der Elektrolyt wird am Rotavapor bei 70°C/20 mbar eingeengt, der erhaltene Rückstand mit 150 ml 1 n Salzsäure und 50 ml Methylenchlorid aufgenommen und ausgerührt; man wäscht die Methylenchlorid-Phase mit 150 ml Wasser, trocknet über Natriumsulfat und destilliert das Methylenchlorid ab. Durch fraktionierte Destillation des Rückstandes mittels einer 10 cm Vigreux-Kolonne unter vermindertem Druck wird bei Kp. 110°C/0,01 mbar eine Fraktion mit einer Reinheit von 97,5 % erhalten. Das ³¹P NMR-Spektrum un d das ¹H NMR-Spektrum stimmen mit einer authentischen Probe überein.

### Beispiel 2

Es wird eine Elektrolysezelle, wie ir Beispiel 1 beschrieben, verwendet. Der Elektrolyt besteht aus 60 ml Dimethylformamid (max. 0,1 % Wasser), 16,12 g (0,050 Mol)Tetra-n-butylammoniumbromid und 8,82 g (0,040 Mol) Chlordiphenylphosphin. Die Durchführung der Elektrolyse erfolgt wie in Beispiel 1 beschrieben. Nach der Elektrolyse wird der Elektrolyt noch 2 h bei 35 - 40°C gerührt.
Gemäß gaschromatographischer Analyse (interner Standard: 2-Methylnaphthalin) liegen im Elektrolyt 6,96 g n-Butyl-diphenylphosphin vor; das
entspricht einer Ausbeute von 72 % bezogen auf eingesetztes Chlordiphenylphosphin.
Nach Aufarbeitung und fraktionierter Destillation, wie in Beispiel 1 beschrieben, erhält man 4,78 g 94 %iges Produkt. Das ³¹P NMR-Spektrum und das ¹H NMR-Spektrum stimmen mit einer authentischen Probe überein.

### Beispiel 3

Es wird eine Elektrolysezelle, wie in Beispiel 1 beschrieben, verwendet. Der Elektrolyt besteht aus 50 ml Dimethylformamid (max. 0,1 % Wasser), 8,16 g (0,030 Mol) Benzyl-triethylammoniumbromid und 5,52 g (0,025 Mol) Chlordiphenylphosphin. Die Ladungsmenge beträgt 1,08 Ah.
Die Durchführung der Elektrolyse und die Aufarbeitung des Elektrolyten erfolgen wie in Beispiel 1 beschrieben.
Nach dem Eindampfen der Methlyenchlorid-Phase hinterbleiben 6,60 g Rückstand,welcher nachgaschromatographischer Analyse (interner Standard: 2-Methylnaphthalin) 85 Gew.-% Benzyl-diphenylphosphin enthält. Die Materialausbeute bezogen auf eingesetztes Chlor-diphenylphosphin beträgt 81 %.
Durch fraktionierte Destillation erhält-man ein 95 %iges Produkt, dessen ³¹P NMR-Spektrum mit einer authentischen Probe übereinstimmt.

### Beispiel 4

Es wird eine Elektrolysezelle, wie in Beispiel 1 beschrieben, verwendet. Der Elektrolyt besteht aus 50 ml Dimethylacetamid (max. 0,1 % Wasser), 4,70 g (0,025 Mol) Benzyl-trimethylammoniumchlorid und 6,62 g (0,030 Mol) Chlordiphenylphosphin. Die Ladungsmenge beträgt 0,96 Ah. Die Elektrolyse erfolgt bei einer Stromstärke von 0,3 A und einer Temperatur von 25°C. Anschließend wird der Elektrolyt noch 3 h bei 35 - 40°C gerührt. Gemäß gaschromatographischer Analyse (interner Standard: 2-Methylnaphthalin) liegen 5,47 g Benzyl-diphenylphosphin im Elektrolyt gelöst vor, die durch Aufarbeitung gemäß Beispiel 1 isoliert werden können. Die Ausbeute beträgt 79 % bezogen auf eingesetztes Benzyl-trimethylammoniumchlorid.

### Beispiel 5

Es wird eine Elektrolysezelle, wie in Beispiel 1 beschrieben, verwendet. Der Elektrolyt besteht aus 50 ml Dimethylformamid (max. 0,1 % Wasser) und 5,57 g (0,030 Mol) Benzyl-trimethylammoniumchlorid. Insgesamt 8,82 g (0,040 Mol) Chlor-diphenylphosphin werden während der Elektrolyse in 4 gleichgroßen Portionen zugesetzt: 2,2 g zu Beginn der Elektrolyse, 2,2 g nach 0,32 Ah, 2,2 g nach 0,64 Ah und 2,2 g nach 1,34 Ah. Die Elektrolyse erfolgt unter fortgesetztem, Rühren und Durchleiten eines schwachen Stickstoffstroms bei einer Stromstärke von 0,3 A und einer Temperatur von 20 bis 25°C. Nach einer Ladungsmenge von 1,61 Ah liegen im Elektrolyt nach gaschromatographischer Analyse (interner Standard: 2-Methylnaphthalin) 7,10 g Benzyl-diphenylphosphin vor, die durch Aufarbeitung gemäß Beispiel 1 isoliert werden können. Die Ausbeute beträgt 85 % bezogen auf eingesetztes Benzyl-trimethylammoniumchlorid.

### Beispiel 6

Es wird eine Elektrolysezelle, wie in Beispiel 1 beschrieben, verwendet. Der Elektrolyt besteht aus 70 ml Dimethylformamid (max. 0,1 % Wasser), 0,4 g Magnesiumchlorid, wasserfrei und 6,62 g (0,030 Mol) Chlor-diphenylphosphin. Man elektrolysiert wie in Beispiel 1 beschrieben. Die Elektrolysetemperatur beträgt 25°C. Nach einer Ladungsmenge von 0,96 Ah wird die Elektrolyse beendet. Dann werden unter Luftausschluß 4,64 g (0,025 Mol) Benzyl-trimethylammoniumchlorid in den Elektrolyten eingetragen und bei 35°C gerührt. Nach 3 h enthält das Reaktionsgemisch gemäß gaschromatographischer Analyse (interner Standard: 2-Methylnaphthalin) 5,72 g Benzyl-diphenylphosphin (Ausbeute 83 %, bezogen auf eingesetztes Benzyl-trimethylammoniumchlorid), die durch Aufarbeitung gemäß Beispiel 1 isoliert werden können.

### Beispiel 7

Es wird eine Elektrolysezelle, wie in Beispiel 1 beschrieben, verwendet. Der Elektrolyt besteht aus 50 ml Dimethylformamid (max. 0,1 % Wasser), 0,4 g Magnesiumchlorid, wasserfrei und 6,62 g (0,030 Mol) Chlor-diphenylphosphin. Man elektrolysiert wie in Beispiel 1 beschrieben. Die Elektrolysetemperatur beträgt 25°C. Nach einer Ladungsmenge von 1,0 Ah wird die Elektrolyse beendet. Dann werden 5,58 g (0,010 Mol) 2,2'-Bis-[(trimethylammonio)-methyl]-1,1'-binaphthyl-dibromid in den Elektrolyten unter Stickstoff eingetragen und 3h bei 30 bis 35°C gerührt bis eine klar Lösung entstanden ist. Unter Ausschluß von Luftsauerstoff wird wie folgt aufgearbeitet:
Der Elektrolyt wird am Rotavapor bei 70°C/20 mbar eingeengt, der erhaltene Rückstand mit 100 ml 1 n Salzsäure und 50 ml Methylenchlorid aufgenommen und ausgerührt. Man wäscht die Methylenchlorid-Phase mit 100 ml Wasser, trocknet über Natriumsulfat und dampft das Methylenchlorid unter vermindertem Druck ab. Es bleiben 8,20 g harziger Feststoff zurück. Dieser Rückstand wird mit 50 ml Isopropanol unter kräftigem Rühren etwa 1 h auf Rückfluß erwärmt. Dabei bildet sich aus dem kompakten Feststoff ein feinteiliges, farbloses Produkt. Nach Abkühlen auf Raumtemperatur saugt man dieses Produkt ab, wäscht 3 x mit je 10 ml kaltem Isopropanol und trocknet im Stickstoffstrom. Man erhält 5,45 g 2,2'-Bis-[(diphenylphosphino)-methyl]-1,1'-binaphthyl ("Naphos"). Die Ausbeute beträgt 84 % bezogen auf eingesetztes 2,2'-Bis-[(trimethylammonio)-methyl]-1,1'-binaphthyl-dibromid.
³¹P NMR-Spektrum (CDCl₃): 96 % des Gesamt-Phosphors entfallen auf das Signal bei -12,3 ppm; das ¹H NMR-Spektrum ist identisch mit einer authentischen Probe.

### Beispiel 8

Man verfährt wie in Beispiel 7 beschrieben, jedoch wird ein Elektrolyt bestehend aus 5,58 g (0,010 Mol) 2,2'-Bis-[(trimethylammonio)-methyl]-1,1'-binaphthyldibromid, 6,62 g (0,030 Mol) Chlor-diphenylphosphin und 50 ml Dimethylformamid (max. 0,1 % Wasser) in die Elektrolyse eingesetzt. Die Ladungsmenge beträgt 0,96 Ah. Nach Aufarbeitung erhält man 5,1 g 2,2'-Bis-[(diphenylphosphino)-methyl]-1,1'-binaphthyl ("Naphos"). Das entspricht einer Ausbeute von 78 % bezogen auf eingesetztes 2,2'-Bis-[(trimethylammonio)-methyl]-1,1'-binaphthyl-dibromid.

### Beispiel 9

In einem trockenen 100 ml-Rundkolben, welcher mit Magnetrührstab, Stickstoff-Einleitrohr, Blasenzähler und einem Septum ausgestattet und zuvor mit trockenem Stickstoff gespült worden ist, legt man 1,86 g (0,010 Mol) gepulvertes Benzyl-trimethylammoniumchlorid vor und fügt mittels einer Injektionsspritze über das Septum bei Raumtemperatur 20 ml einer Lösung von 2,24 g (0,010 Mol) Kaliumdiphenylphosphid in Tetrahydrofuran (als 0,5 m Lösung fertig bezogen von Aldrich-Chemie GmbH & Co. KG, D-89555 Steinheim, BRD) in einem Guß zu. Man rührt noch 4 Stunden bei Raumtemperatur nach, wobei die Farbe allmählich von rot nach gelb umschlägt. Unter Ausschluß von Luftsauerstoff verrührt man das Reaktionsgemisch mit 20 ml 1 n Salzsäure, trennt die Tetrahydrofuran-Phase ab, extrahiert die wäßrige Phase 2 x mit 10 ml Tetrahydrofuran und vereinigt die beiden Extrakte mit der Tetrahydrofuran-Phase.
Nach gaschromatographischer Analyse (interner Standard: 2-Methylnaphthalin) enthalten die vereinigten Tetrahydrofuran-Phasen 2,50 g Benzyl-diphenyiphosphin; das entspricht einer Ausbeute von 90 %.

### Beispiel 10

Man verwendet eine Apparatur wie in Beispiel 9 beschrieben. Nach Inertisierung mit Stickstoff legt man 5,58 g (0,010 Mol) 2,2'-Bis-[(trimethylammonio)-methyl]-1,1'-binaphthyl-dibromid vor und fügt dazu unter Rühren im Verlaufe von etwa 5 Minuten mittels einer Injektionsspritze 44 ml einer Lösung von 4,93 g (0,022 Mol) Kalium-diphenylphosphid in Tetrahydrofuran (als 0,5 m Lösung fertig bezogen von Aldrich-Chemie GmbH & Co. KG, D-89555 Steinheim, BRD). die Temperatur beträgt 20 bis 30°C. Man rührt noch 3 h bei Raumtemperatur nach und vermischt dann das Reaktionsgemisch mit 20 ml 1 n Salzsäure, trennt die Tetrahydrofuran-Phase ab und extrahiert die wäßrige Phase 2 x mit 10 ml Tetrahydrofuran. Die vereinigten Tetrahydrofuran-Phasen werden durch Destillation unter vermindertem Druck aufkonzentriert. Der Rückstand wird mit 50 ml Isopropanol versetzt und unter kräftigem Rühren 1 Stunde auf Rückfluß erwärmt, wobei sich das harzige Material in ein farbloses kristallines Produkt umwandelt. Nach Abkühlen auf Raumtemperatur saugt man das Produkt ab, wäscht 3 x mit je 10 ml kaltem Isopropanol und trocknet im Stickstoffstrom. Man erhält 5,4 g 2,2'-Bis-[(diphenylphosphino)-methyl]-1,1'-binaphthyl ("Naphos"). Die Ausbeute beträgt 83 % bezogen auf das eingesetzte 2,2'-Bis-[(trimethylammonio)-methyl]-1,1'-binaphthyl-dibromid.

## Patentansprüche

1. Verfahren zur Herstellung von Phosphinen der Formel (I) 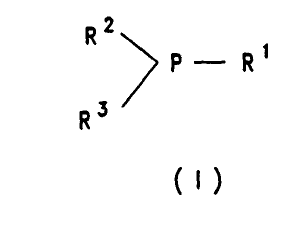 worin bedeuten:
R¹ (C₁-C₁₀)Alkyl, (C₃-C₁₀)Cycloalkyl, C(YZ)Aryl
Y, Z (C₁-C₄)Alkyl, Wasserstoff,
Aryl Phenyl, Naphthyl, Anthracenyl, Phenanthrenyl oder Biphenyl, Binaphthyl
wobei die Alkyl und Cycloalkylreste auch mit CN, O(C₁-C₄)Alkyl, CO(C₁-C₄)Alkyl, COO(C₁-C₄)Alkyl,
-CH₂-CH₂-(C₁-C₁₀)-Polyfluoralkyl, wobei die Cycloalkylreste auch -O- oder -S-Glieder im Ring aufweisen können,
und wobei
die Arylreste mit CN, Halogen,
CO(C₁-C₄)Alkyl COO(C₁-C₄)Alkyl,
-CH₂-CH₂-(C₁-C₁₀)Polyfluoralkyl, einem 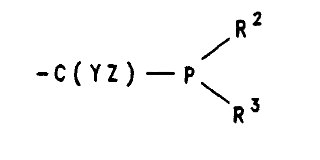 oder einem 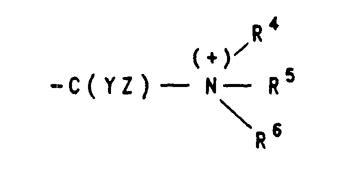 Rest substituiert sein können
R², R³ unabhängig voneinander Phenyl, Naphthyl, Anthracenyl, die auch mit Halogen, (C₁-C₄)Alkyl, (C₁-C₄)Alkoxy substituiert sein können,
R⁴, R⁵, R⁶ gleich oder verschieden (C₁-C₁₂)Alkyl oder
R⁴ und R⁵ zusammen einen 5- oder 6-gliedrigen Ring, der gegebenenfalls weitere N-, O- oder S-Atomen im Ring enthalten kann,
oder
R⁴, R⁵ und R⁶ ein bicyclisches Ringsystem mit Stickstoff als Brückenkopfatom und gegebenenfalls weiteren Stickstoff-, Sauerstoff- oder Schwefelatomen im Ring,
**dadurch gekennzeichnet**, daß ein Diarylphosphin der Formel (II) 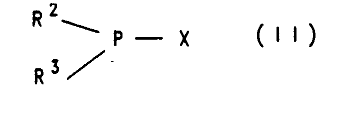 worin
R² und R³ die vorstehende genannte Bedeutung besitzen und
X für Brom, Chlor, Fluor, (C₁-C₄)Alkoxy, O-Phenyl steht
mit einem Reduktionsmittel und einer quartären Ammoniumverbindung der Formel (III) 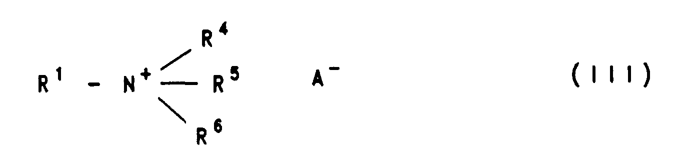 worin
R¹, R⁴, R⁵, R⁶ die genannte Bedeutung besitzt und
A ein Anion einer organischen oder anorganischen Säure darstellt,
umgesetzt wird.

2. Verfahren nach Anspruch 1, **dadurch gekennzeichnet**, daß in Formel (I)
R¹ für (C₁-C₈)Alkyl, (C₃-C₈)Cycloalkyl, CH₂-Phenyl, -CH₂-Naphthyl, CH₂-Biphenyl steht, wobei die Phenyl, Biphenyl und Naphththylreste mit 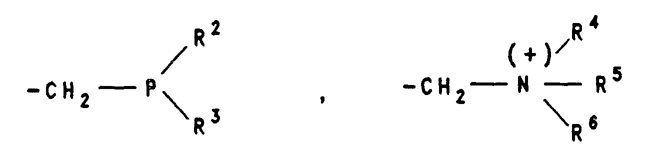 substituiert sein können,
R²,R³ für Phenyl und Naphthyl,
R⁴, R⁵, R⁶ für (C₁-C₁₀)-Alkyl
und
X für Brom, Chlor oder Fluor steht.

3. Verfahren nach Anspruch 1, **dadurch gekennzeichnet**, daß die Formel (I) für 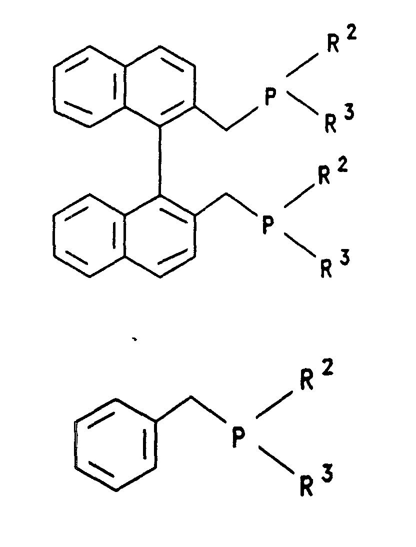 oder 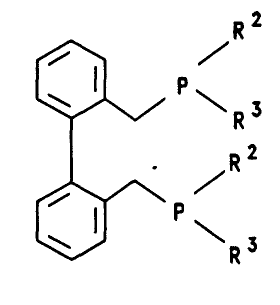 steht.

4. Verfahren nach mindestens einem der Ansprüche 1 bis 3, **dadurch gekennzeichnet**, daß die Formel (III) für Tetramethylammonium-, Tetraethylammonium-, Tetrapropylammonium-, Tetrabutylammonium, Allyl-trimethylammonium-, Benzyl-trimethylammonium-, N-Benzyl-N-methylpiperidinium-, N-Benzyl-N,N'-dimethylpiperazinium-, N-Benzyl-N-methylmorpholinium-, N-Benzyl-(diazabicyclo[2.2.2]octyl)-ammonium-, (2-Naphthyl-methyl)-triethylammonium, 4-Fluorbenzyltrimethylammonium-, Pentafluorbenzyl-trimethyl-ammonium, Dichlorbenzyl-trimethylammonium-, 2-Cyanobenzyl-trimethylammonium-, 4-(Trifluormethyl)-benzyl-ammonium, Cyclohexyl-trimethylammonium-, (Carbomethoxy-methyl)-trimethylammonium, 2,2'-Bis-[(trimethylammonio)-methyl]-biphenyl oder 2,2'-Bis-[(trimethylammonio)-methyl]-1,1'-binaphthyl Salze steht.

5. Verfahren nach mindestens einem der Ansprüche 1 bis 3, **dadurch gekennzeichnet**, daß die Formel (III) für 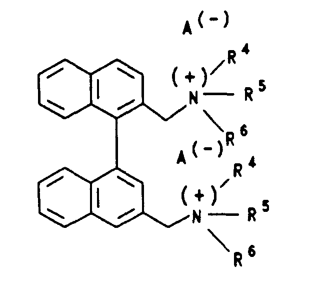 steht, worin R⁴, R⁵, R⁶ und A die genannte Bedeutung besitzen.

6. Verfahren nach mindestens einem der Ansprüche 1 bis 5, **dadurch gekennzeichnet**, daß die Ammoniumverbindung der Formel (III) vor der Reduktion zugesetzt wird.

7. Verfahren nach mindestens einem der Ansprüche 1 bis 6, **dadurch gekennzeichnet**, daß die Ammoniumverbindung der Formel (III) nach der Reduktion zugesetzt wird.

8. Verfahren nach mindestens einem der Ansprüche 1 bis 7, **dadurch gekennzeichnet**, daß die Reduktion mit Metallen oder Metallhydriden, insbesondere Alkalimetallen durchgeführt wird.

9. Verfahren nach mindestens einem der Ansprüche 1 bis 7, **dadurch gekennzeichnet**, daß die Reduktion elektrochemisch durchgeführt wird.

10. Verfahren nach Anspruch 9, **dadurch gekennzeichnet**, daß die elektrochemische Reduktion in einer ungeteilten Elektrolysezelle durchgeführt wird.

11. Verfahren nach Anspruch 9 oder 10, **dadurch gekennzeichnet**, daß die Kathode aus Metall, insbesondere Aluminium, Magnesium, Eisen, Nickel, Chrom, Titan, Kupfer, Zink, Blei, Cadmium, Silber, Gold, Platin oder einer Legierung dieser Metalle, insbesondere Chromnickelstahl besteht.

12. Verfahren nach Anspruch 9 oder 10, **dadurch gekennzeichnet**, daß die Kathode aus Kohlenstoffmaterialien, insbesondere Graphit oder glasartigem Kohlenstoff besteht.

13. Verfahren nach mindestens einem der Ansprüche 9 bis 12, **dadurch gekennzeichnet**, daß als Anode Aluminium, Calcium oder Magnesium, insbesondere Magnesium eingesetzt wird.

14. Verfahren nach mindestens einem der Ansprüche 9 bis 13, **dadurch gekennzeichnet**, daß als Elektrolyt ein dipolar aprotisches Lösungsmittel, insbesondere Acetonitril, Dimethylacetamid, N-Methylpyrrolidon, Tetrahydrofuran oder Dimethylformamid, bevorzugt Dimethylformamid, eingesetzt wird.

15. Verfahren nach mindestens einem der Ansprüche 9 bis 14, **dadurch gekennzeichnet**, daß die Reaktion bei Temperaturen zwischen 0 und 80°C, insbesondere 10 und 60°C, durchgeführt wird.

16. Verfahren nach mindestens einem der Ansprüche 9 bis 15, **dadurch gekennzeichnet**, daß die Elektrolyse bei Stromdichten zwischen 1 und 100 mA/cm², insbesondere 5 und 50 mA/cm², durchgeführt wird.

17. Verfahren nach mindestens einem der Ansprüche 1 bis 8, **dadurch gekennzeichnet**, daß man als Lösungsmittel Diethylether, Diisopropylether, Di-n-propylether, Methyl-t-butylether oder Tetrahydrofuran, insbesondere Tetrahydrofuran einsetzt.

## Claims

1. A process for preparing phosphines of the formula (I) 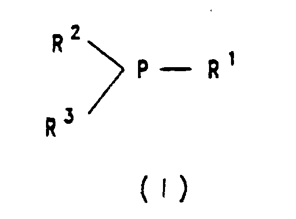 where:
R¹ is (C₁-C₁₀)alkyl, (C₃-C₁₀)cycloalkyl, C(YZ)aryl
Y, Z is (C₁-C₄)alkyl, hydrogen,
Aryl is phenyl, naphthyl, anthracenyl, phenanthrenyl or biphenyl, binaphthyl
where the alkyl and cycloalkyl radicals can also be substituted by CN, O(C₁-C₄)alkyl, CO(C₁-C₄)alkyl, COO(C₁-C₄)alkyl.
-CH₂-CH₂-(C₁-C₁₀)polyfluoroalkyl, where the cycloalkyl radicals can also contain -O- or -S- moieties in the ring;
the aryl radicals can be substituted by CN, halogen, CO(C₁-C₄)alkyl, COO(C₁-C₄)alkyl,
-CH₂-CH₂-(C₁-C₁₀)polyfluoroalkyl, a 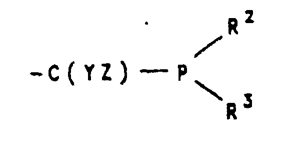 or a 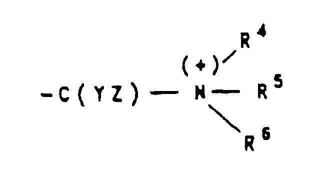 radical,
R², R³ are, independently of one another, phenyl, naphthyl, anthracenyl, which can also be substituted by halogen, (C₁-C₄)alkyl, (C₁-C₄)alkoxy,
R⁴, R⁵, R⁶ are identical or different and are (C₁-C₁₂)alkyl or x
R⁴ and R⁵ together form a 5-membered or 6-membered ring which can, if desired, contain further N, 0 or S atoms in the ring,
or
R⁴, R⁵ and R⁶ form a bicyclic ring system having nitrogen as bridge head atom and, if desired, further nitrogen, oxygen or sulphur atoms in the ring,
which comprises reacting a diarylphosphine of the formula (II) 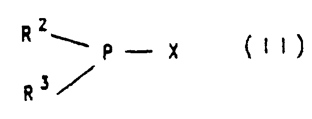 where
R² and R³ are as defined above
and
X is bromine, chlorine, fluorine, (C₁-C₄)alkoxy, O-phenyl,
with a reducing agent and a quaternary ammonium compound of the formula (III) 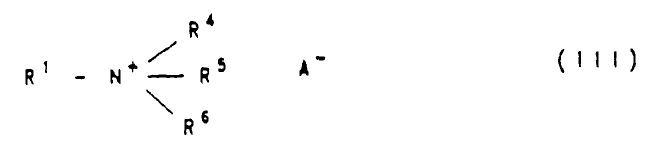 where
R¹, R⁴, R⁵, R⁶ are as defined above and
A is an anion of an organic or inorganic acid.

2. The process as claimed in claim 1, wherein in formula (I)
R¹ is (C₁-C₈)alkyl, (C₃-C₈)cycloalkyl, CH₂-phenyl, -CH₂-naphthyl, CH₂-biphenyl, where the phenyl, biphenyl and naphthyl radicals can be substituted by 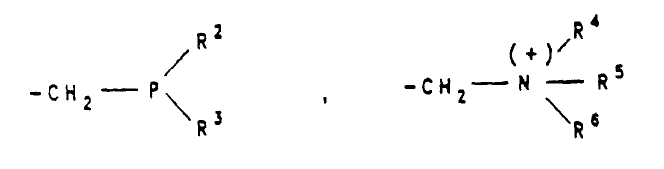
R², R³ are phenyl and naphthyl,
R⁴, R⁵, R⁶ are (C₁-C₁₀)alkyl
and
X is bromine, chlorine or fluorine.

3. The process as claimed in claim 1, wherein the formula (I) is

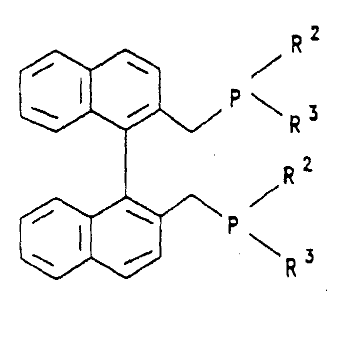

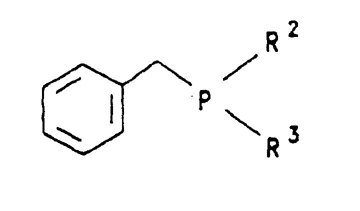

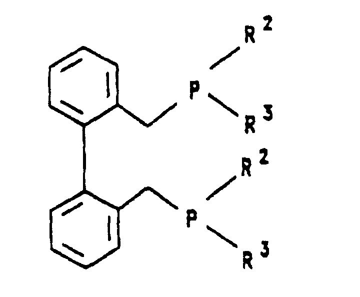

4. The process as claimed in at least one of claims 1 to 3, wherein the compound of the formula (III) is a tetramethylammonium, tetraethylammonium, tetrapropylammonium, tetrabutylammonium, allyltrimethylammonium, benzyltrimethylammonium, N-benzyl-N-methylpiperidinium, N-benzyl-N,N'-dimethylpiperazinium, N-benzyl-N-methylmorpholinium, N-benzyl-(diazobicyclo[2.2.2]octyl)ammonium, (2-naphthylmethyl)triethylammonium, 4-fluorobenzyltrimethylammonium, pentafluorobenzyltrimethylammonium, dichlorobenzyltrimethylammonium, 2-cyanobenzyltrimethylammonium, 4-(trifluoromethyl)benzylammonium, cyclohexyltrimethylammonium, (carbomethoxymethyl)trimethylammonium, 2,2'bis[(trimethylammonio)methyl]biphenyl or [2,2'-bis[trimethylammonio)methyl]-1,1'-binaphthyl salt.

5. The process as claimed in at least one of claims 1 to 3, wherein the formula (III) is 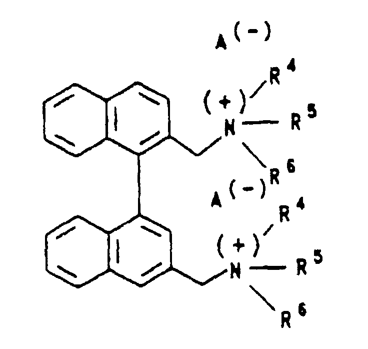 where R⁴, R⁵, R⁶ and A are as defined above.

6. The process as claimed in at least one of claims 1 to 5, wherein the ammonium compound of the formula (III) is added prior to the reduction.

7. The process as claimed in at least one of claims 1 to 6, wherein the ammonium compound of the formula (III) is added after the reduction.

8. The process as claimed in at least one of claims 1 to 7, wherein the reduction is carried out using metals or metal hydrides, in particular alkali metals.

9. The process as claimed in at least one of claims 1 to 7, wherein the reduction is carried out electrochemically.

10. The process as claimed in claim 9, wherein the electrochemical reduction is carried out in an undivided electrolysis cell.

11. The process as claimed in claim 9 or 10, wherein the cathode comprises metal, in particular aluminum, magnesium, iron, nickel, chromium, titanium, copper, zinc, lead, cadmium, silver, gold, platinum or an alloy of these metals, in particular chromium-nickel steel.

12. The process as claimed in claim 9 or 10, wherein the cathode comprises carbon materials, in particular graphite or vitreous carbon.

13. The process as claimed in at least one of claims 9 to 12, wherein the anode used is aluminum, calcium or magnesium, in particular magnesium.

14. The process as claimed in at least one of claims 9 to 13, wherein the electrolyte used is a dipolar aprotic solvent, in particular acetonitrile, dimethylacetamide, N-methylpyrrolidone, tetrahydrofuran or dimethylformamide, preferably dimethylformamide.

15. The process as claimed in at least one of claims 9 to 14, wherein the reaction is carried out at temperatures between 0 and 80°C, in particular between 10 and 60°C.

16. The process as claimed in at least one of claims 9 to 15, wherein the electrolysis is carried out at current densities between 1 and 100 mA/cm², in particular between 5 and 50 mA/cm².

17. The process as claimed in at least one of Claims 1 to 8, wherein the solvent used is diethyl ether, diisopropyl ether, di-n-propyl ether, methyl t-butyl ether or tetrahydrofuran, in particular tetrahydrofuran.

## Revendications

1. Procédé de préparation de phosphines de formule (I) 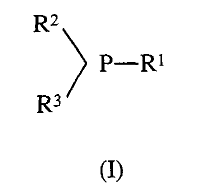 où:
R¹ représente alkyle en C₁₋₁₀, cycloalkyle en C₃₋₁₀, C(YZ)aryle
Y, Z représentent alkyle en C₁₋₄, l'hydrogène,
aryle représente phényle, naphtyle, anthracényle, phénanthrényle ou biphényle, binaphtyle
où les restes alkyles et cycloalkyles peuvent aussi être substitués par CN, O-alkyle en C₁₋₄, CO-alkyle en C₁₋₄, COO-alkyle en C₁₋₄,
-CH₂-CH₂-polyfluoroalkyle en C₁₋₁₀, où les restes cycloalkyles peuvent aussi comporter des membres -O- ou -S- dans le cycle ;
et où les restes aryles peuvent être substitués par CN, halogène, CO-alkyle en C₁₋₄, COO-alkyle en C₁₋₄, -CH₂-CH₂-polyfluoroalkyle en C₁₋₁₀, un reste 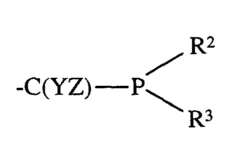 ou un reste 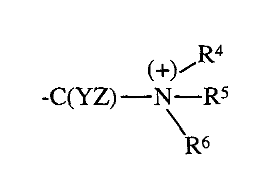
R², R³ représentent indépendamment l'un de l'autre phényle, naphtyle, anthracényle qui peuvent aussi être substitués par halogène, alkyle en C₁₋₄, alcoxy en C₁₋₄,
R⁴, R⁵, R⁶ représentent des alkyles en C₁₋₁₂ identiques ou différents ou
R⁴ et R⁵ représentent ensemble un cycle à 5 ou 6 chaînons qui peut éventuellement contenir d'autres atomes N, O ou S dans le cycle,
ou
R⁴, R⁵ et R⁶ représentent un système cyclique bicyclique avec de l'azote comme atome de tête de pont et éventuellement d'autres atomes d'azote, d'oxygène ou de soufre dans le cycle,
**caractérisé en ce qu**'une diarylphosphine de formule (II) 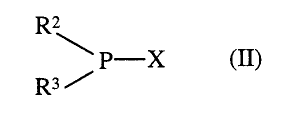
où R² et R³ possèdent la signification citée précédemment
et
X représente le brome, le chlore, le fluor, alcoxy en C₁₋₄, O-phényle est mise à réagir avec un réducteur et un composé d'ammonium quaternaire de formule (III) 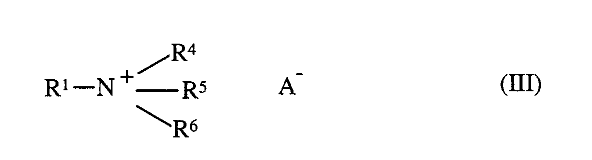
où R¹, R⁴, R⁵, R⁶ possèdent la signification indiquée et
A représente un anion d'un acide organique ou inorganique.

2. Procédé selon la revendication 1, **caractérisé en ce que**, dans la formule (I)
R¹ représente alkyle en C₁₋₈, cycloalkyle en C₃₋₈, CH₂-phényle, -CH₂-naphtyle, CH₂-biphényle, où les restes phényle, biphényle et naphtyle peuvent être substitués par 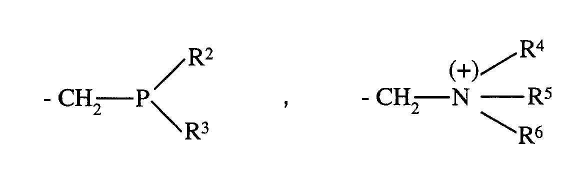
R², R³ représentent phényle et naphtyle,
R⁴, R⁵, R⁶ représentent alkyle en C₁₋₁₀
et
X représente le brome, le chlore ou le fluor.

3. Procédé selon la revendication 1, **caractérisé en ce que** la formule (I) représente 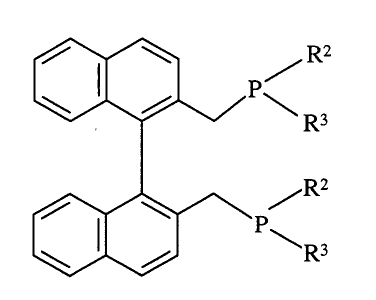 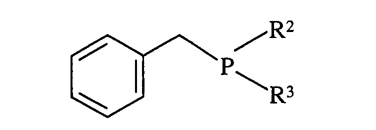 ou

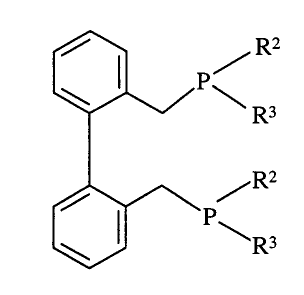

4. Procédé selon au moins l'une des revendications 1 à 3, **caractérisé en ce que** la formule (III) représente des sels de tétraméthylammonium, de tétraéthylammonium, de tétrapropylammonium, de tétrabutylammonium, d'allyltriméthylammonium, de benzyltriméthylammonium, de N-benzyl-N-méthylpipéridinium, de N-benzyl-N,N'-diméthylpipérazinium, de N-benzyl-N-méthylmorpholinium, de N-benzyl-(diazabicyclo[2.2.2]octyl)ammonium, de (2-naphtylméthyl)triéthylammonium, de 4-fluorobenzyltriméthylammonium, de pentafluorobenzyltriméthylammonium, de dichlorobenzyltriméthylammonium, de 2-cyanobenzyltriméthylammonium, de 4-(trifluorométhyl)benzylammonium, de cyclohexyltriméthylammonium, de (carbométhoxyméthyl)triméthylammonium, de 2,2'-bis-[(triméthylammonio)méthyl]biphényle ou de 2,2'-bis-[(triméthylammonio)méthyl]-1,1'-binaphtyle.

5. Procédé selon au moins l'une des revendications 1 à 3, **caractérisé en ce que** la formule (III) représente 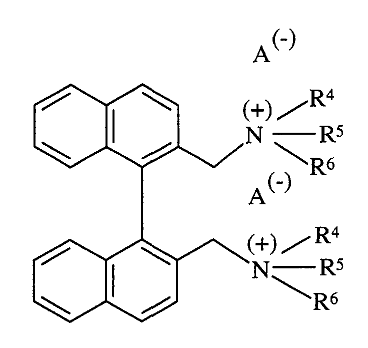 où R⁴, R⁵, R⁶ et A possèdent la signification citée.

6. Procédé selon au moins l'une des revendications 1 à 5, **caractérisé en ce que** le composé d'ammonium de formule (III) est ajouté avant la réduction.

7. Procédé selon au moins l'une des revendications 1 à 6, **caractérisé en ce que** le composé d'ammonium de formule (III) est ajouté après la réduction.

8. Procédé selon au moins l'une des revendications 1 à 7, **caractérisé en ce que** la réduction est réalisée avec des métaux ou des hydrures métalliques, en particulier des métaux alcalins.

9. Procédé selon au moins l'une des revendications 1 à 7, **caractérisé en ce que** la réduction est réalisée par voie électrochimique.

10. Procédé selon la revendication 9, **caractérisé en ce que** la réduction électrochimique est réalisée dans une cellule d'électrolyse non divisée.

11. Procédé selon la revendication 9 ou 10, **caractérisé en ce que** la cathode consiste en métal, en particulier en aluminium, magnésium, fer, nickel, chrome, titane, cuivre, zinc, plomb, cadmium, argent, or, platine ou en un alliage de ces métaux, en particulier en acier au chrome et au nickel.

12. Procédé selon la revendication 9 ou 10, **caractérisé en ce que** la cathode consiste en matériaux carbonés, en particulier en graphite ou en carbone vitreux.

13. Procédé selon au moins l'une des revendications 9 à 12, **caractérisé en ce que** l'aluminium, le calcium ou le magnésium, en particulier le magnésium, est utilisé comme anode.

14. Procédé selon au moins l'une des revendications 9 à 13, **caractérisé en ce qu**'un solvant aprotique dipolaire, en particulier l'acétonitrile, le diméthylacétamide, la N-méthylpyrrolidone, le tétrahydrofurane ou le diméthylformamide, de préférence le diméthylformamide, est utilisé comme électrolyte.

15. Procédé selon au moins l'une des revendications 9 à 14, **caractérisé en ce que** la réaction est conduite à des températures comprises entre 0 et 80°C, en particulier 10 et 60°C.

16. Procédé selon au moins l'une des revendications 9 à 15, **caractérisé en ce que** l'électrolyse est réalisée à des densités de courant comprises entre 1 et 100 mA/cm², en particulier 5 et 50 mA/cm².

17. Procédé selon au moins l'une des revendications 1 à 8, **caractérisé en ce que** l'on utilise comme solvant le diéthyléther, le diisopropyléther, le di-n-propyléther, le méthyl-t-butyléther ou le tétrahydrofurane, en particulier le tétrahydrofurane.
